# EUROPEAN PATENT SPECIFICATION

(11) **EP 2 402 794 B1**
(45) Date of publication and mention of the grant of the patent: **12.10.2016**
(21) Application number: 11163744.3
(22) Date of filing: 26.04.2011
(51) Int. Cl.: G02B 1/04, G02C 7/10

(54) **A fabrication method of transparent resin substrate along with transparent resin substrate**
Herstellungsverfahren von durchsichtigem Harzsubstrat zusammen mit dem durchsichtigen Harzsubstrat
Procédé de fabrication de substrat de résine transparente et substrat de résine transparente

(30) Priority: 11.05.2010 JP 2010109253
(43) Date of publication of application: 04.01.2012
(73) Proprietor: Tony Optical Enterprises, Co. Ltd., Taipei 114 (TW)
(72) Inventor: Mizuno, Takuji, Sabae City, Fukui 916-0005 (JP)
(74) Representative: Rau, Schneck & Hübner Patentanwälte Rechtsanwälte PartGmbB

(56) References cited:
- EP-A1- 0 894 620
- EP-A1- 1 375 600
- EP-A1- 1 852 483
- EP-A2- 1 001 282
- US-B1- 6 680 350

## Description

The present invention relates generally to a transparent resin substrate used for glasses lenses, and more particularly to an innovative one which involves the preparation method of transparent resin substrate with a minimum transmittance less than 5% in the wavelength of 800nm - 1000nm.

Glasses can be used to correct the eyesight and protect the eyes from harmful infrared or ultraviolet light; so sunglasses have to be added with UV absorbent or IR absorbent for preventing UV or IR transmission. Such glasses are disclosed in JP 2007-271744 and in JP 2000-7871.

With 6,680,350 B1 discloses molding compositions of transparent thermoplastic polymers and Phthalocyanines or Naphthalocyanines, the production and use thereof and products made from these molding compositions, e.g. glazing made of these molding compositions. Further, absorption films and multi-layered panels are known from EP 0 894 620 A1. The use of Phthalocyanine compound is known from EP 1 375 600 A1. EP 1 001 282 A2 and EP 1 854 483 A1 each disclose optical filters.

Transparent resin substrate made of MMA (methyl methacrylate) resin, acrylic, PC (polycarbonate) resin, or nylon is preferably used for glasses lenses, however, PC of stronger impact resistance is a preferred option of glasses lenses in view of relatively poor impact resistance of MMA; but PC requires a molding temperature over 250°C, so conventional IR absorbent may lead to degradation or decomposition, making it impossible to acquire lenses of excellent IR absorbance and impact resistance.

The objective of the present invention is to provide a glasses lens that can block off efficiently specific wavelength in sunlight, especially 800nm - 1000nm infrared ray; so polycarbonate (PC) resin, etc, of excellent impact resistance can be applied to the fabrication method of transparent resin substrate, thereby fabricating transparent resin substrate.

The present invention is focuses on Phthalocyanine pigment that's not easily decomposed even in high temperature; with different molecule structures, Phthalocyanine pigment's threshold of absorbing wavelength may vary in 800nm - 1000nm; yet, the existing Phthalocyanine pigment's threshold range is extremely narrow, and the transmittance is also approx. 10%; by mixing properly Phthalocyanine pigments of different molecule structures, namely, mixing Phthalocyanine pigments of threshold within 800nm - 1000nm on the spectral transmission curve, it is possible to fabricate transparent resin substrate of targeted spectral transmission curve.

As defined in Claim 1 a fabrication method of a transparent resin substrate comprises the steps melting a resin, mixing said resin with a first Phthalocyanine pigment (A) comprising a first minimum value of a first spectral transmission curve with a transmittance less than 10% within 800nm - 850nm wavelength; mixing said resin with a second Phthalocyanine pigment (B) comprising a second minimum value of a second spectral transmission curve with a transmittance less than 10% within 950nm - 1000nm wavelength; mixing said resin with a third Phthalocyanine pigment (C) comprising a third minimum value of a third spectral transmission curve with a transmittance less than 10% within 875nm - 925nm wavelength; injection molding of said mixed resin in a cavity; and obtaining a transparent resin substrate comprising an overall spectral transmission curve having within 800nm - 1000nm wavelength a minimum value area with a transmittance less than 5%, wherein an overall weight portion of the first Phthalocyanine pigment (A), the second Phthalocyanine pigment (B) and the third Phthalocyanine pigment (C) compared to the total substrate weight of the transparent resin substrate is in the range of 0.1 ppm - 50 ppm. Phthalocyanine pigments (A), (B), (C) represent one or several types. The transparent resin substrate is provided with one of the groups of polarizing and dimming means.

The preferred embodiment of said resin is shown by polycarbonate resin defined in Claim 2; moreover, the specific value of Phthalocyanine pigment (A), (B), (C) is as follows: 16.0ppm - 17.0ppm for Phthalocyanine pigment (A), 18.5ppm - 19.5ppm for (B), and 16.0ppm - 17.0ppm for (C).

As defined in Claim 3, said transparent resin substrate comprises a resin that is injection molded by the melted resin, comprising a weight portion of the first Phthalocyanine pigment (A) compared to the substrate weight is 16.0ppm - 17.0ppm, the weight portion of the second Phthalocyanine pigment (B) compared to the substrate weight is 18.5ppm - 19.5ppm, and the weight portion of the third Phthalocyanine pigment (C) compared to the substrate weight is 16.0ppm - 17.0ppm. Phthalocyanine pigments (A), (B), (C) represent one or several types. The transparent resin substrate is provided with one of the groups of polarizing and dimming means.

As defined in Claim 4, a polarizer is adhered onto at least one surface of the transparent resin substrate.

The preferred embodiment of said resin is shown by polycarbonate resin defined in Claim 5; moreover, the weight portion of Phthalocyanine pigments (A), (B), (C) compared to the substrate weight is 16.0ppm - 17.0ppm for the first Phthalocyanine pigment (A), 18.5ppm - 19.5ppm for the sec ond Phthalocyanine pigment (B), and 16.0ppm - 17.0ppm for the third Phthalocyanine pigment (C).

As shown in claim 6, the transparent resin substrate is provided with eyesight correction means.
- [FIG. 1]: (a) - (c) depict a transmittance spectrogram showing mixture of toluene solvent at 5% weight with Phthalocyanine pigments of different molecule structures.
- [FIG. 2]: (a), (b) depict a transmittance spectrogram showing mixture of toluene solvent at 5% weight with Phthalocyanine pigments of different molecule structures.
- [FIG. 3]: depicts a transmittance spectrum of mixing properly Phthalocyanine pigments of different structures within the weight of 0.1ppm - 50ppm.
- [FIG. 4]: (a) - (c) depict a transmittance spectrogram of Phthalocyanine pigment of the preferred embodiment of the present invention.
- [FIG. 5]: depicts a transmittance spectrogram of transparent resin substrate of the preferred embodiment of the present invention;
- [FIG. 6]: depicts a transmittance spectrogram of transparent resin substrate of the present invention which is engineered with polarizing functions.

The present invention can provide a transparent resin substrate that can block off efficiently specific wavelength in sunlight, especially 800nm - 1000nm infrared ray.

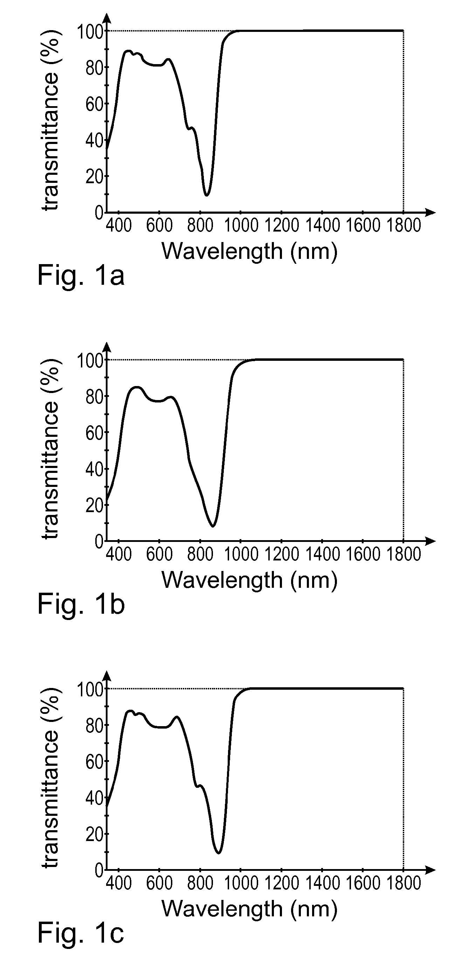

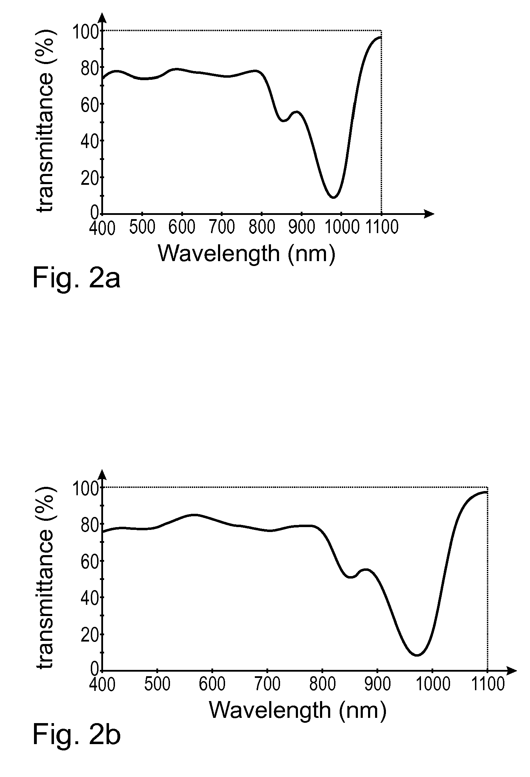

The preferred embodiment of the present invention is described with a reference to the following drawings:
The melted resin for the transparent resin substrate of the present invention can be injection molded from the cavity to form transparent resin substrate of outstanding transparency; notwithstanding Diethylene glycol bis-allyl carbonate (CR-39), polymethyl methacrylate (PMMA) and methyl methacrylate (MMA) can be used, the resin of the present invention melted over 250°C is a preferred option, for instance: polycarbonate (PC) resin;
The following is a detailed description of PC resin.
Phthalocyanine pigment is a well-known pigment that can absorb IR ray, and its threshold of absorbing wavelength may vary due to different molecule structures; as shown in FIG. 1, there are currently available with Phthalocyanine pigments of different thresholds of absorbing wavelength for various purposes;
One example of the currently available Phthalocyanine pigment is represented by "EX Color®" made by Nippon Shokubai Co., Ltd; Said Phthalocyanine pigment is dissolved by the solvent such as methyl ethyl ketone or 2-butane and toluene; in such state, the transmittance spectrum can be analyzed by the solvent; FIGS. 1 and 2 depict the transmittance spectrum showing mixture of toluene solvent at 5% weight with Phthalocyanine pigments of different molecule structures;
The Phthalocyanine pigment of the present invention has a minimum value of spectral transmission curve with a transmittance less than 10%, at 800nm - 1000nm wavelength;
FIGS. 1 and 2 depict the preferred embodiments of Phthalocyanine pigment.

Referring to FIG. 1(a), Phthalocyanine pigment around 820nm has a threshold with a transmittance less than 10%; referring to FIG. 1(b), Phthalocyanine pigment, around 850nm has a threshold with a transmittance less than 10%; referring to FIG. 1(c), Phthalocyanine pigment around 880nm has a threshold with a transmittance less than 10%; referring also to FIG. 2(a), Phthalocyanine pigment around 970nm has a threshold with a transmittance less than 10%; referring to FIG. 2(b), Phthalocyanine pigment around 980nm has a threshold with a transmittance less than 10%.

Amongst Phthalocyanine pigments shown in FIGS. 1 and 2, over two pigments of different thresholds at 0.1ppm - 50ppm are melted and mixed into 250°C - 300°C polycarbonate; in the case of less than 0.1ppm, IR ray is almost not absorbed; in the case of excess of 50ppm, visible light may be blocked off; in the range of visible light (approx. 500nm - 700nm wavelength), the lower limit of permitted transmittance is about 15%;

The available combinations are listed below: Phthalocyanine pigment around 820nm with a transmittance less than 10% as shown in FIG. 1(a); Phthalocyanine pigment around 980nm with a transmittance less than 10% as shown In FIG. 2(a) or FIG. 2(b); and Phthalocyanine pigment around 880nm with a transmittance less than 10% as shown in FIG. 1(c).

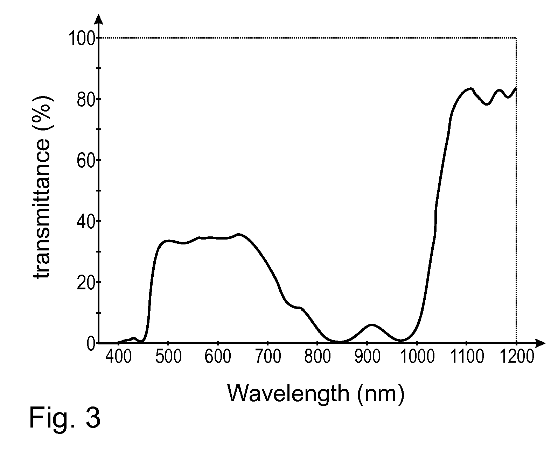

Thus, the transmittance of visible light is guaranteed to be within a spectral transmission curve over 15%, and the standard mixed amount can be obtained experimentally; for instance, within 0.1ppm - 50ppm weight, Phthalocyanine pigments of different structures are mixed properly (e.g. by 15ppm), with the spectral transmission curve of the transparent resin substrate shown in FIG. 3; in this transmittance spectrum, high IR absorbing energy less than 5% may occur around 800nm - 880nm and 970nm, about 10% peak around 900nm, and then a sharp spectral transmission curve may occur from 970nm to form an overall waveform.

In such case, within the weight range of 0.1ppm - 50ppm, Phthalocyanine pigment with a threshold around 900nm and 970nm may be properly added or increased; next, transmittance spectrum is obtained for the transparent resin substrate to analyze the spectral transmission curve; by repeating these steps, it is possible to determine the optimum combination of Phthalocyanine pigments; furthermore, given the higher price of Phthalocyanine pigment, the amount of Phthalocyanine pigment shall be reduced to obtain the lowest-cost combination after reaching the intended spectral transmission curve.

The aforementioned Phthalocyanine pigment combinations are mixed into polycarbonate melted at 250°C - 300°C, then the mixed solvent is injected into the cavity to obtain a transparent resin substrate that has a flat minimum value area with a transmittance less than 5%, and spectral transmission curve at 800nm - 1000nm wavelength; this transparent resin substrate can be used as optical instruments such as lens or filters, or molded into the glasses lenses of excellent IR absorbance with preset size and shape.

The transparent resin substrate of the present invention can also be provided with polarizing and/or dimming or eyesight correction functions; additionally, other pigments or additives can be added where necessary.

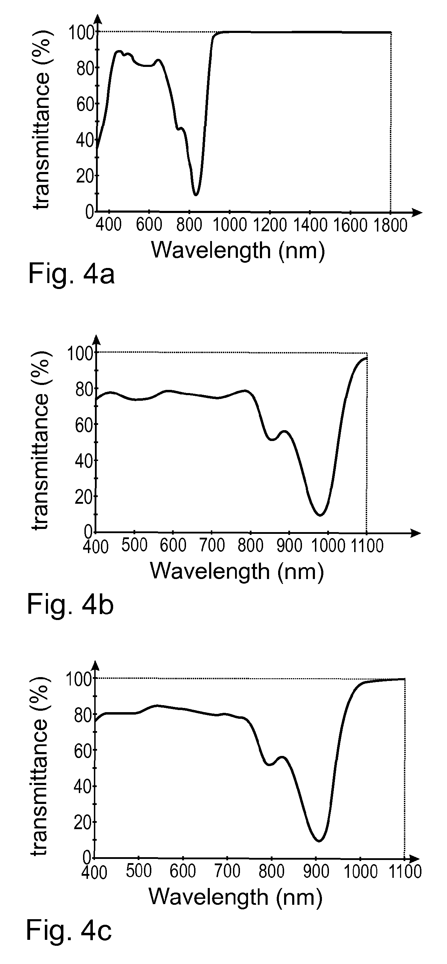

The materials for the preferred embodiment of the present invention are listed below:
Resin: transparent polycarbonate (H3000U made by Mitsubishi Chemical), 1000kg
Phthalocyanine pigment (A): "EX Color®" IR14 made by Nippon Shokubai Co., Ltd. (maximum absorption wavelength is 832nm when 5% weight is melted in chloroform solvent, as shown in FIG. 4(a))
Range: 16.0g - 17.0g
Phthalocyanine pigment (B): the same with IR910 (maximum absorption wavelength is 977nm when 5% weight is melted in chloroform solvent, as shown in FIG. 4(b))
Range: 18.5g - 19.5g
Phthalocyanine pigment (C): the same with IR20 (maximum absorption wavelength is 904nm when 5% weight is melted in chloroform solvent, as shown in FIG. 4(c))
Range: 16.0g - 17.0g
After melting and mixing at 300°C, said materials is injection molded into a transparent resin substrate;

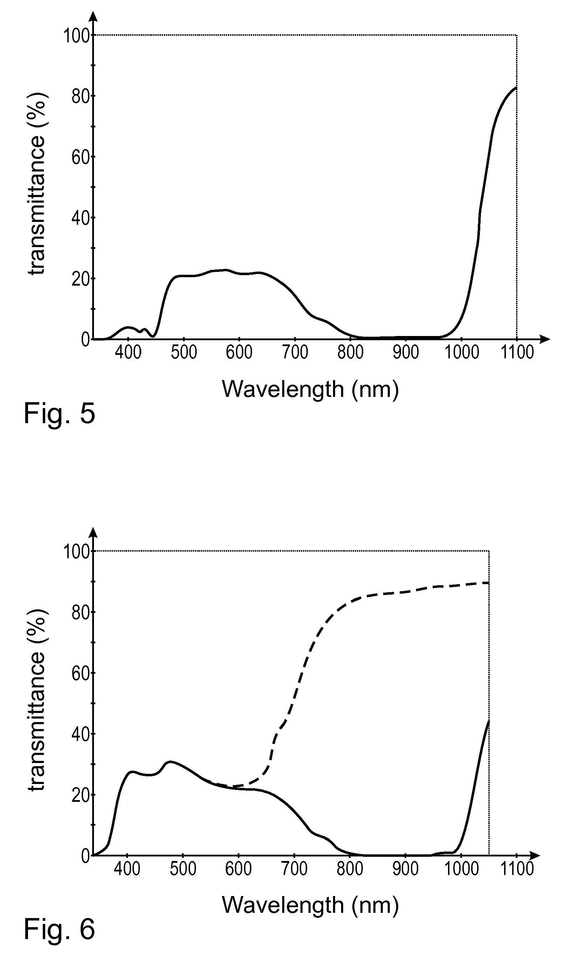

FIG. 5 depicts a transmittance spectrum of transparent resin substrate (glasses lenses) when the aforementioned (A), (B), (C) are defined at 16.5g, 19.0g, 16.5g in the center of the range; the transparent resin substrate has a flat minimum value area with a transmittance less than 5% (almost 0), at the spectral transmission curve of 800nm - 1000nm.
FIG. 6 depicts a preferred embodiment of the transparent resin substrate (glasses lenses) of polarizing functions suitable for the present invention;
A broken line represents the spectral transmission curve of transparent resin substrate of polarizing functions; a polarizer can be adhered onto at least one surface of the transparent resin substrate; a common transparent resin substrate of polarizing functions cannot inhibit IR transmission functions, enabling to transmit over 90% of 800nm - 1000nm wavelength;
Once IR absorption functions of the present invention are applied to the transparent resin substrate of polarizing functions, it is possible to obtain a transparent resin substrate which has a flat minimum value area with a transmittance less than 5% (almost 0), at the spectral transmission curve of 800nm - 1000nm.
The present invention is not limited to the aforementioned preferred embodiment;
For instance, the transparent resin substrate of the present invention can be provided with polarizing and/or dimming functions, and especially eyesight correction functions for glasses lenses;
In addition, at the overall weight of 0.1ppm - 50ppm, there are Phthalocyanine pigment (A) within 800nm - 850nm wavelength, and with a minimum value of spectral transmission curve with a transmittance less than 10%; Phthalocyanine pigment (B) within 950nm - 1000nm wavelength, and with a minimum value of spectral transmission curve with a transmittance less than 10%; and Phthalocyanine pigment (C) within 875nm - 925nm wavelength, and with a minimum value of spectral transmission curve with a transmittance less than 10%; Phthalocyanine pigment (A), (B), (C) represent one or several types.

Furthermore, Phthalocyanine pigment or other pigments or additives can be added into the resin.

The transparent resin substrate of the present invention can be widely applied to common glasses, sunglasses (with polarizing or dimming functions), front-hung glasses and goggles as well as other optical instruments such as filters.

## Claims

1. A fabrication method of a transparent resin substrate, comprising the steps:
- melting a resin,
- mixing said resin with a first Phthalocyanine pigment (A)
- mixing said resin with a second Phthalocyanine pigment (B)
- mixing said resin with a third Phthalocyanine pigment (C)
- injection molding of said mixed resin in a cavity; and
- obtaining a transparent resin substrate
wherein an overall weight portion of each of the first Phthalocyanine pigment (A), the second Phthalocyanine pigment (B) and the third Phthalocyanine pigment (C) compared to the total substrate weight of the transparent resin substrate is in the range of 0.1 ppm - 50 ppm,
**characterized in that**
- the first Phthalocyanine pigment (A) comprises a first minimum value of a first spectral transmission curve with a transmittance less than 10% within 800nm - 850nm wavelength;
- the second Phthalocyanine pigment (B) comprises a second minimum value of a second spectral transmission curve with a transmittance less than 10% within 950nm - 1000nm wavelength;
- the third Phthalocyanine pigment (C) comprises a third minimum value of a third spectral transmission curve with a transmittance less than 10% within 875nm - 925nm wavelength;
- the transparent resin substrate comprises an overall spectral transmission curve having within 800nm - 1000nm wavelength a minimum value area with a transmittance less than 5%; and
- the transparent resin substrate is provided with at least one of the group of polarizing and dimming means.

2. The method defined in claim 1, wherein said resin is a polycarbonate (PC) resin, the weight portion of the first Phthalocyanine pigment (A) compared to the substrate weight is 16.0ppm - 17.0ppm, the weight portion of the second Phthalocyanine pigment (B) compared to the substrate weight is 18.5ppm - 19.5ppm for (B), and the weight portion of the third Phthalocyanine pigment (C) compared to the substrate weight is 16.0ppm - 17.0ppm for (C).

3. A transparent resin substrate, wherein a resin is injection molded by the melted resin in a cavity, comprising:
a. a first Phthalocyanine pigment (A)
b. a second Phthalocyanine pigment (B) and
c. a third Phthalocyanine pigment (C),
wherein the overall weight portion of each of said three Phthalocyanine pigments (A, B, C) compared to a total substrate weight of the transparent resin substrate is in the range of 0.1ppm - 50ppm;
**characterized in that**
- the first Phthalocyanine pigment (A) comprises a first minimum value of a first spectral transmission curve with a transmittance less than 10% within 800nm - 850nm wavelength;
- the second Phthalocyanine pigment (B) comprises a second minimum value of a second spectral transmission curve with a transmittance less than 10% within 950nm - 1000nm wavelength;
- the third Phthalocyanine pigment (C) comprises a third minimum value of a third spectral transmission curve with a transmittance less than 10% within 875nm - 925nm wavelength;
- the spectral transmission curve of the transparent resin substrate has a minimum value area with a transmittance less than 5% within 800nm - 1000nm wavelength; and
- wherein said transparent resin substrate is provided with at least one of the group of polarizing and dimming means.

4. A substrate defined in claim 3, wherein a polarizer is adhered onto at least one surface of the transparent resin substrate.

5. The substrate defined in claim 3 or 4, wherein said resin is a polycarbonate (PC) resin, the weight portion of the first Phthalocyanine pigment (A) compared to the substrate weight is 16.0ppm - 17.0ppm, the weight portion of the second Phthalocyanine pigment (B) compared to the substrate weight is 18.5ppm - 19.5ppm, and the weight portion of the third Phthalocyanine pigment (C) compared to the substrate weight is 16.0ppm - 17.0ppm.

6. The substrate defined in one of the claims 3 to 5, wherein said transparent resin substrate is provided with eyesight correction means.

## Patentansprüche

1. Verfahren zur Herstellung eines durchsichtigen Harzsubstrats, die folgenden Schritte umfassend:
- Schmelzen eines Harzes,
- Mischen des Harzes mit einem ersten Phthalocyanin-Pigment (A)
- Mischen des Harzes mit einem zweiten Phthalocyanin-Pigment (B)
- Mischen des Harzes mit einem dritten Phthalocyanin-Pigment (C)
- Spritzgießen des gemischten Harzes in einen Hohlraum; und
- Erhalten eines durchsichtigen Harzsubstrats
wobei ein Gesamtgewichtsanteil von jedem des ersten Phthalocyanin-Pigments (A), des zweiten Phthalocyanin-Pigments (B) und des dritten Phthalocyanin-Pigments (C) im Vergleich zu dem Gesamtsubstratgewicht des durchsichtigen Harzsubstrats im Bereich von 0,1 ppm - 50 ppm liegt,
**dadurch gekennzeichnet, dass**
- das erste Phthalocyanin-Pigment (A) einen ersten Minimalwert eines ersten spektralen Transmissionsverlaufs mit einer Transmission von weniger als 10 % innerhalb der Wellenlängen 800 nm - 850 nm umfasst;
- das zweite Phthalocyanin-Pigment (B) einen zweiten Minimalwert eines zweiten spektralen Transmissionsverlaufs mit einer Transmission von weniger als 10 % innerhalb der Wellenlängen 950 nm - 1000 nm umfasst;
- das dritte Phthalocyanin-Pigment (C) einen dritten Minimalwert eines dritten spektralen Transmissionsverlaufs mit einer Transmission von weniger als 10 % innerhalb der Wellenlängen 875 nm - 925 nm umfasst;
- das durchsichtige Harzsubstrat einen spektralen Gesamttransmissionsverlauf mit einem Minimalwertbereich innerhalb der Wellenlängen 800 nm - 1000 nm mit einer Transmission von weniger als 5 % umfasst; und
- das durchsichtige Harzsubstrat wenigstens mit einem aus der Gruppe von Polarisations- und Dimmmitteln versehen ist.

2. Verfahren nach Anspruch 1, wobei das Harz ein Polycarbonat-(PC)-Harz ist, der Gewichtsanteil des ersten Phthalocyanin-Pigments (A) im Vergleich zum Substratgewicht 16,0 ppm - 17,0 ppm beträgt, der Gewichtsanteil des zweiten Phthalocyanin-Pigments (B) im Vergleich zum Substratgewicht 18,5 ppm - 19,5 ppm für (B) beträgt und der Gewichtsanteil des dritten Phthalocyanin-Pigments (C) im Vergleich zum Substratgewicht 16,0 ppm - 17,0 ppm für (C) beträgt.

3. Durchsichtiges Harzsubstrat, wobei ein Harz durch das geschmolzene Harz in einem Hohlraum spritzgegossen wird, umfassend:
a. ein erstes Phthalocyanin-Pigment (A)
b. ein zweites Phthalocyanin-Pigment (B) und
c. ein drittes Phthalocyanin-Pigment (C),
wobei der Gesamtgewichtsanteil von jedem der drei Phthalocyanin-Pigmente (A, B, C) im Vergleich mit einem Gesamtsubstratgewicht des durchsichtigen Harzsubstrats im Bereich von 0,1 ppm - 50 ppm liegt; **dadurch gekennzeichnet, dass**
- das erste Phthalocyanin-Pigment (A) einen ersten Minimalwert eines ersten spektralen Transmissionsverlaufs mit einer Transmission von weniger als 10 % innerhalb der Wellenlängen 800 nm - 850 nm umfasst;
- das zweite Phthalocyanin-Pigment (B) einen zweiten Minimalwert eines zweiten spektralen Transmissionsverlaufs mit einer Transmission von weniger als 10 % innerhalb der Wellenlängen 950 nm - 1000 nm umfasst;
- das dritte Phthalocyanin-Pigment (C) einen dritten Minimalwert eines dritten spektralen Transmissionsverlaufs mit einer Transmission von weniger als 10 % innerhalb der Wellenlängen 875 nm - 925 nm umfasst;
- der spektrale Transmissionsverlauf des durchsichtigen Harzsubstrats einem Minimalwertbereich mit einer Transmission von weniger als 5 % innerhalb der Wellenlängen 800 nm - 1000 nm aufweist; und
- wobei das durchsichtige Harzsubstrat wenigstens mit einem aus der Gruppe von Polarisations- und Dimmmitteln versehen ist.

4. Substrat nach Anspruch 3, wobei ein Polarisator auf wenigstens einer Oberfläche des durchsichtigen Harzsubstrats angebracht ist.

5. Substrat nach Anspruch 3 oder 4, wobei das Harz ein Polycarbonat-(PC)-Harz ist, der Gewichtsanteil des ersten Phthalocyanin-Pigments (A) im Vergleich zum Substratgewicht 16,0 ppm - 17,0 ppm beträgt, der Gewichtsanteil des zweiten Phthalocyanin-Pigments (B) im Vergleich zum Substratgewicht 18,5 ppm - 19,5 ppm beträgt und der Gewichtsanteil des dritten Phthalocyanin-Pigments (C) im Vergleich zum Substratgewicht 16,0 ppm - 17,0 ppm beträgt.

6. Substrat nach einem der Ansprüche 3 bis 5, wobei das durchsichtige Harzsubstrat mit Mitteln für Sehfehlerkorrektur versehen ist.

## Revendications

1. Méthode de fabrication d'un substrat en résine transparent, comprenant les étapes suivantes :
- fusion d'une résine,
- mélange de ladite résine avec un premier pigment à la phtalocyanine (A)
- mélange de ladite résine avec un deuxième pigment à la phtalocyanine (B)
- mélange de ladite résine avec un troisième pigment à la phtalocyanine (C)
- moulage par injection de ladite résine mixte dans une cavité ; et
- obtention d'un substrat en résine transparent.
dans laquelle une partie en poids totale de chacun du premier pigment à la phtalocyanine (A), du deuxième pigment à la phtalocyanine (B) et du troisième pigment à la phtalocyanine (C) comparée au poids de substrat total du substrat en résine transparent est dans la plage de 0,1 à 50 ppm,
**caractérisée en ce que**
- le premier pigment à la phtalocyanine (A) comprend une première valeur minimale d'une première courbe de transmission spectrale ayant une transmittance inférieure à 10 % dans la plage de longueurs d'ondes de 800-850 nm ;
- le deuxième pigment à la phtalocyanine (B) comprend une deuxième valeur minimale d'une deuxième courbe de transmission spectrale ayant une transmittance inférieure à 10 % dans la plage de longueurs d'ondes de 950-1000 nm ;
- le troisième pigment à la phtalocyanine (C) comprend une troisième valeur minimale d'une troisième courbe de transmission spectrale ayant une transmittance inférieure à 10 % dans la plage de longueurs d'ondes de 875-925 nm ;
- le substrat en résine transparent comprend une courbe de transmission spectrale globale comportant dans une plage de longueurs d'ondes de 800-1000 nm une zone de valeurs minimales ayant une transmittance inférieure à 5 % ; et
- le substrat en résine transparent comprend au moins un moyen dans le groupe des moyens de polarisation et de gradation.

2. Méthode selon la revendication 1, dans laquelle ladite résine est une résine polycarbonate (PC), la partie en poids du premier pigment à la phtalocyanine (A) comparée au poids du substrat est de 16,0-17,0 ppm, la partie en poids du deuxième pigment à la phtalocyanine (B) comparée au poids du substrat est de 18,5-19,5 ppm pour (B), et la partie en poids du troisième pigment à la phtalocyanine (C) comparée au poids du substrat est de 16,0-17,0 ppm pour (C).

3. Substrat en résine transparent, dans lequel une résine à l'état fondu est moulée par injection dans une cavité, comprenant :
a. un premier pigment à la phtalocyanine (A)
b. un deuxième pigment à la phtalocyanine (B) et
c. un troisième pigment à la phtalocyanine (C)
dans lequel la partie en poids totale de chacun desdits trois pigments à la phtalocyanine (A, B, C) comparée au poids de substrat total du substrat en résine transparent est dans la plage de 0,1 à 50 ppm ; **caractérisé en ce que**
- le premier pigment à la phtalocyanine (A) comprend une première valeur minimale d'une première courbe de transmission spectrale ayant une transmittance inférieure à 10 % dans la plage de longueurs d'ondes de 800-850 nm ;
- le deuxième pigment à la phtalocyanine (B) comprend une deuxième valeur minimale d'une deuxième courbe de transmission spectrale ayant une transmittance inférieure à 10 % dans la plage de longueurs d'ondes de 950-1000 nm ;
- le troisième pigment à la phtalocyanine (C) comprend une troisième valeur minimale d'une troisième courbe de transmission spectrale ayant une transmittance inférieure à 10 % dans la plage de longueurs d'ondes de 875-925 nm ;
- la courbe de transmission spectrale du substrat en résine transparent comporte une zone de valeurs minimales ayant une transmittance inférieure à 5 % dans une plage de longueurs d'ondes de 800-1000 nm ; et
- dans lequel ledit substrat en résine transparent comprend au moins un moyen dans le groupe des moyens de polarisation et de gradation.

4. Substrat selon la revendication 3, dans lequel un polariseur adhère sur au moins une surface du substrat en résine transparent.

5. Substrat selon la revendication 3 ou 4, dans lequel ladite résine est une résine polycarbonate (PC), la partie en poids du premier pigment à la phtalocyanine (A) comparée au poids du substrat est de 16,0-17,0 ppm, la partie en poids du deuxième pigment à la phtalocyanine (B) comparée au poids du substrat est de 18,5-19,5 ppm, et la partie en poids du troisième pigment à la phtalocyanine (C) comparée au poids du substrat est de 16,0-17,0 ppm.

6. Substrat selon l'une des revendications 3 à 5, dans lequel ledit substrat en résine transparent comprend un moyen de correction de la vision.
